# EUROPÄISCHE PATENTSCHRIFT

(11) **EP 4 015 154 B1**
(45) Veröffentlichungstag und Bekanntmachung des Hinweises auf die Patenterteilung: **21.06.2023**
(21) Anmeldenummer: 21213335.9
(22) Anmeldetag: 09.12.2021
(51) Int. Cl.: B25J 1/00, B25J 9/14, B25J 9/16, B25J 13/02, B25J 15/06, B66F 3/35, B25J 9/04, B25J 18/02, B66C 1/02, B66C 23/02

(54) **UNTERDRUCKHANDHABUNGSEINRICHTUNG ZUM ANSAUGEN, ANHEBEN, VERLAGERN, ABSENKEN UND/ODER ABSETZEN VON GEGENSTÄNDEN**
VACUUM HANDLING DEVICE FOR DRAWING, LIFTING, DISPLACING, LOWERING AND / OR DEPOSITING OBJECTS
DISPOSITIF DE PRÉHENSION PAR VIDE PERMETTANT D'ASPIRER, DE SOULEVER, DE DÉPLACER, D'ABAISSER ET/OU DE DÉPOSER DES OBJETS

(30) Priorität: 15.12.2020 DE 102020133624
(43) Veröffentlichungstag der Anmeldung: 22.06.2022
(73) Patentinhaber: J. Schmalz GmbH, 72293 Glatten (DE)
(72) Erfinder: Frey, Matthias, 72172 Sulz-Dürrenmettstetten (DE)
(74) Vertreter: DREISS Patentanwälte PartG mbB

(56) Entgegenhaltungen:
- CN-U- 209 989 023
- DE-A1- 3 934 922
- DE-C1- 19 817 801
- DE-U1-202020 104 055

## Beschreibung

Die Erfindung betrifft eine Unterdruckhandhabungseinrichtung zum Ansaugen, Anheben, Verlagern, Absenken und Absetzen von Gegenständen, die als kollaborierender Roboter ausgebildet ist.

Unterdruckhandhabungseinrichtungen sind in großem Umfang bekanntgeworden. Sie umfassen typischerweise eine unterdruckerzeugende Einrichtung oder eine Anschlussschnittstelle zu einer unterdruckführenden Versorgung, eine anhebbar und absenkbar sowie verlagerbar angeordnete Sauggreifereinrichtung, an welche ein Sauggreifer anschließbar ist oder die einen Sauggreifer bildet oder umfasst, an welchem der zu handhabende Gegenstand ansaugbar ist. Zur Ausführung der Hubbewegung werden in bekannter Weise ein unter der Wirkung von Unterdruck kontrahierbarer Hubschlauch oder aber motorisch angetriebene Seilzüge oder schwenkbare lasttragende Kranarme eingesetzt. Es kommen auch Roboter zum Einsatz, insbesondere Handhabungsroboter, mit einem mehrere gelenkig miteinander verbundene Glieder aufweisenden Roboterarm, um Handhabungsaufgaben der eingangs genannten Art auszuführen, insbesondere, um solche Handhabungsaufgaben automatisiert oder mit erhöhter Kraft oder erhöhter Geschwindigkeit auszuführen, als dies von einer Bedienperson im manuellen, also handgeführten, Betrieb einer solchen Unterdruckhandhabungseinrichtung möglich wäre.

Es ist auch bereits bekannt, Industrieroboter als sogenannte "kollaborierende Roboter" auszubilden. Dies bedeutet, dass der Roboter in einem gemeinsamen oder überlappenden Arbeitsbereich einer Bedienperson betrieben wird und dass gegebenenfalls auch Interaktionen zwischen der Bedienperson und dem Roboter stattfinden oder stattfinden können.

Das Dokument DE 20 2020 104055 U1 offenbart eine Vorrichtung gemäß des Oberbegriffs von Anspruch 1.

Der vorliegenden Erfindung liegt die Aufgabe zugrunde, eine Handhabungseinrichtung der eingangs genannten Art dahingehend weiterzubilden, dass sie vielfältiger einsetzbar ist.

Diese Aufgabe wird erfindungsgemäß gelöst durch die kennzeichnenden Merkmale von Anspruch 1. Die Erfindung ist definiert durch eine Unterdruckhandhabungseinrichtung zum Ansaugen, Anheben, Verlagern, Absenken und Absetzen von Gegenständen, die als kollaborierender Roboter ausgebildet ist, umfassend:
eine unterdruckerzeugende Einrichtung oder eine Anschlussschnittstelle zu einer Unterdruckversorgungseinrichtung,
eine Robotersteuereinrichtung, mehrere gelenkig miteinander verbundene und/oder translatorisch zueinander stellbare Glieder die einen Roboterarm bilden,
mehrere Antriebseinrichtungen zum Bewegen der gelenkig miteinander verbundenen Glieder oder der translatorisch zueinander stellbaren Glieder des Roboterarms gegeneinander,
wobei die bewegbaren Glieder des Roboterarms vertikal oberhalb eines Aufenthaltsbereichs einer Bedienperson im kollaborierenden Betrieb des Roboters angeordnet sind, eine Sauggreifereinrichtung, an welche ein Sauggreifer anschließbar ist oder die einen Sauggreifer bildet oder umfasst, an welchem der zu handhabende Gegenstand ansaugbar ist,
wobei die Sauggreifereinrichtung Steuerorgane für die Steuerung der Zuführung von Unterdruck zu einem Sauggreifer umfasst,
einen unterdruckbeaufschlagbaren Hubschlauch als translatorischen Antrieb zur Ausführung einer vertikalen Stellbewegung entlang einer Z-Achse, mit einer ersten Anbindungsschnittstelle des Hubschlauchs zu einem Glied des Roboters und mit einer zweiten Anbindungsschnittstelle des Hubschlauchs zu der Sauggreifereinrichtung,
wobei der Hubschlauch biege- und verwindungssteif ausgebildet ist, so dass durch den Roboter veranlasste Bewegungen quer zur Z-Achse nicht zu einer Pendelbewegung der Sauggreifereinrichtung mit dem angesaugten Gegenstand führen können,
wobei die Sauggreifereinrichtung wahlweise für automatischen Steuerungsablauf durch die Robotersteuerung und wahlweise für die manuelle Bedienung durch eine Bedienperson ausgebildet ist und hierfür manuelle Bedienelemente aufweist.

Erfindungsgemäß wird also vorgeschlagen, in die Unterdruckhandhabungseinrichtung einen kollaborierenden Roboter zu integrieren, wobei dessen angetriebene Glieder des Roboterarms stets vertikal oberhalb des Aufenthaltsbereichs der Bedienperson verbleiben, so dass ein kollaborierender Betrieb unter Anwesenheit einer Bedienperson stets sicher oder zumindest risikoarm ausgeführt werden kann. Eine sich in den Aufenthaltsbereich der Bedienperson erstreckende vertikale Z-Achse des Roboters bzw. der Unterdruckhandhabungseinrichtung ist hingegen nicht von einem direkt antreibbaren Glied des Roboters gebildet, sondern von dem Antrieb durch den kontrahierbaren Hubschlauch. Hierdurch greift zwar die vertikale Z-Achse in den Aufenthaltsbereich der Bedienperson ein, jedoch ist ein Verletzungsrisiko durch den Einsatz des unterdruckbeaufschlagbaren Hubschlauchs auch bei schweren zu handhabenden Gegenständen reduziert, weil durch einen kontrahierbaren Hubschlauch betriebene Unterdruckhebevorrichtungen auch bei Störungen des Unterdruckbetriebs nicht zu einer Ablösung eines angesaugten Gegenstands und zu dessen Herabfallen führen, sondern die Sauggreifereinrichtung senkt sich lediglich mit gemächlicher Geschwindigkeit ab. Daher eignet sich der Einsatz eines Hubschlauchs als translatorischer Antrieb entlang der vertikalen Z-Achse für einen kollaborierenden Betrieb der Handhabungseinrichtung. Es können dadurch höhere Lasten gehandhabt werden, insbesondere bis 120 kg, insbesondere bis 110 kg, insbesondere bis 100 kg.

Dadurch, dass der Hubschlauch biege- und verwindungssteif ausgebildet ist, was durch eine dementsprechende Ausbildung des Hubschlauchs selbst oder aber durch Integration einer starren längenverstellbaren, insbesondere teleskopierenden, Führungseinrichtung bei dem Hubschlauch, insbesondere innerhalb des Hubschlauchs, realisiert werden kann, ist auch ein vollautomatischer Betrieb der Handhabungseinrichtung möglich, weil es nicht zu einer schwer kontrollierbaren Schwenk- oder Pendelbewegung der Sauggreifereinrichtung mit dem angesaugten Gegenstand kommt. Es erweist sich aber auch im kollaborierenden, also handgeführten oder handunterstützten Betrieb der Einrichtung, als vorteilhaft.

Insgesamt eignet sich die erfindungsgemäß ausgebildete Unterdruckhandhabungseinrichtung somit wahlweise für einen automatisierten Betrieb aller Komponenten der Einrichtung einschließlich der heb- und senkbaren Sauggreifereinrichtung als auch für eine manuelle Bedienung durch eine Bedienperson. Die vorausgehend erwähnten manuellen Bedienelemente bei der Sauggreifereinrichtung können einen manuell ergreifbaren Handgriff in verschiedenster Ausbildung umfassen oder bedeuten, mittels dessen die Bedienperson eine manuelle Handführung der Sauggreifereinrichtung samt Sauggreifer und angesaugtem Gegenstand ausführen kann, also Kräfte zur translatorischen Verbringung der Sauggreifereinrichtung einleiten kann. In zweckmäßiger und an sich bekannter Weise kann ein solcher Handgriff auch schwenkbar mit der Sauggreifereinrichtung verbunden sein. Des Weiteren umfassen die genannten manuellen Bedienelemente elektrische oder mechanische Elemente, insbesondere Tasten, Eingabedisplays oder berührungssensitive Felder und/oder Hebel für die Betätigung der Steuerorgane der Sauggreifereinrichtung, also insbesondere einer darin aufgenommenen Ventileinheit für die Steuerung der Zuführung von Unterdruck zu einem angeschlossenen Sauggreifer.

Nach einer weiteren bevorzugten Ausführungsform der Unterdruckhandhabungseinrichtung sind manuelle Bedienelemente bei der Sauggreifereinrichtung vorgesehen, die mit der Robotersteuereinrichtung derart zusammenwirken, dass über die manuellen Bedienelemente auf die Robotersteuereinrichtung Einfluss genommen werden kann.

Nach einer bevorzugten Ausführungsform der Erfindung ist weiter vorgesehen, dass über die manuellen Bedienelemente die Robotersteuereinrichtung dazu veranlasst werden kann, den Roboterarm in einen Handführbetrieb zu versetzen, in welchem ein handgeführtes Bewegen des Roboterarms und seiner Glieder zugelassen ist. Durch einen solchen Handführbetrieb (der häufig auch als "Free Drive"-Modus bezeichnet wird) kann der Roboter vom Bediener in eine gewünschte Arbeitskonfiguration gebracht werden, ohne dass die Roboterglieder hierfür angesteuert werden müssen.

Denkbar und vorteilhaft ist insbesondere auch, dass über die manuellen Bedienelemente die Robotersteuereinrichtung veranlasst werden kann, einen Bewegungs-Lernmodus zu aktivieren, bei dem der Roboter das handgeführte Bewegen als Bewegungsmuster für einen Arbeitsbetrieb erlernt. Die Bedienperson kann also im Handführbetrieb dem Roboter die gewünschte Bewegung auf diese Weise eingeben, so dass der Roboter diese Bewegung "erlernt" und später automatisiert ausführt.

Ein solcher Handführbetrieb soll nur kontrolliert und beabsichtigt möglich sein, er bedarf also für seine Aktivierung typischerweise der Freigabe durch eine sogenannte "Zustimmeinrichtung". Hierfür kann ein sogenannter "Zustimmschalter" bei dem Roboter vorgesehen sein, mit welchem der vorerwähnte Handführbetrieb aktiviert werden kann. Ein solcher Zustimmschalter kann beispielsweise an einer Steuerkonsole des Roboters selbst vorgesehen sein. Demgegenüber erweist es sich als vorteilhaft, wenn der Zustimmschalter im Bereich der Sauggreifereinrichtung, also im Bereich des manuellen Zugriffs der Bedienperson, vorgesehen ist, damit ein solcher Übergang in einen Handführbetrieb komfortabel ausführbar ist. Insbesondere können im Bereich der Sauggreifereinrichtung, insbesondere Tasten oder berührungssensitive Felder, vorgesehen sein, mittels derer diese Zustimmung erteilt bzw. ein Zustimmungsschalter betätigt werden kann.

Es ist aber hiervon losgelöst auch denkbar und vorteilhaft, wenn über Bedienelemente bei der Sauggreifereinrichtung eine Interaktion der Bedienperson mit der Robotersteuereinrichtung möglich ist, also insbesondere Betriebsparameter, insbesondere abhängig von physikalischen Parametern der zu handhabenden Gegenstände eingegeben werden können. Dies kann durch Verbindung über ein geeignetes Bus-System erfolgen.

Als besonders vorteilhaft erweist es sich, wenn bei der Sauggreifereinrichtung ein Bedienelemente umfassender Bedienabschnitt in einer händisch umgreifbaren Form und Größe ausgebildet ist, so dass sämtliche Bedienelemente beim Umgreifen des Bedienabschnitts erreichbar und betätigbar sind. Dies erweist sich als besonders vorteilhaft, wenn die Bedienperson in einem Bewegungs-Lernmodus eine handgeführte Bewegung als ein zu lernendes Bewegungsmuster für einen Arbeitsbetrieb ausführt. Dies ermöglicht es der Bedienperson, bei der Handführung eine geforderte Bedienung der Bedienelemente auszuführen, um einen Bewegungs-Lernmodus zu aktivieren oder aktiviert zu halten und dabei gleichzeitig Kraft zur manuellen Führung des Roboters auszuüben. Hierdurch wird der Bedienkomfort weiter erhöht.

Die Bediensicherheit und der Bedienkomfort können weiter dadurch erhöht werden, dass der Roboter eine Rückmeldung über seinen aktuellen Betriebsmodus gibt. Hierzu kann eine Signalausgabeeinrichtung an sich beliebiger Art vorgesehen sein, welche insbesondere derart ausgebildet sein kann, dass bei Aktivierung des Handführbetriebs oder eines Bewegungs-Lernmodus ein optisches und/oder akustisches und/oder haptisches Signal an die Bedienperson ausgegeben wird. In diesem Handführbetrieb sind wenigstens einige oder wahlweise alle zueinander stellbaren und miteinander antriebsverbundenen Glieder des Roboters im antriebslosen Leerlaufzustand, damit eine möglichst widerstandsarme Handführung des Roboters bzw. der Unterdruckhandhabungseinrichtung oder ihrer Sauggreifereinrichtung möglich ist.

Die Sauggreifereinrichtung umfasst zweckmäßigerweise eine Ventileinrichtung, die bei einer bevorzugten Ausführungsform sowohl durch die Robotersteuereinrichtung als auch durch die manuellen Bedienelemente bei der Sauggreifereinrichtung ansteuerbar oder betätigbar ist. Insbesondere kann ein Proportionalventil durch ein manuelles Bedienelement ansteuerbar sein, so dass sein Öffnungsgrad verändert werden kann. Insbesondere kann die Ventileinrichtung mit einem mittels eines manuellen Bedienelements direkt mechanisch betätigbaren Ventil ausgebildet sein.

Der Roboter bzw. die Roboterkinematik können bei der erfindungsgemäßen Unterdruckhandhabungseinrichtung in an sich beliebiger Weise realisiert sein. Insbesondere kommen Roboter mit einer Scara-Kinematik, Portal-Kinematik, klassische 6-Achs-Kinematik, Delta-Kinematik oder Seilzug-Kinematik in Frage.

Es kann sich insbesondere als vorteilhaft erweisen, wenn die Unterdruckhandhabungseinrichtung als Wand- oder Säulenschwenkkrananordnung mit, vorzugsweise in einer horizontalen Ebene, schwenkbaren Kranarmen ausgebildet ist, welche die Glieder des Roboters bilden. - Insbesondere bei einer solchen Anordnung erweist es sich als vorteilhaft, wenn der Hubschlauch an einem endständigen Kranarm angeordnet ist.

Zur Realisierung einer weiteren Achse der Handhabungseinrichtung bzw. des Roboters erweist es sich als vorteilhaft, wenn die Sauggreifereinrichtung um die Z-Achse drehbar bezüglich eines nächstliegenden Glieds des Roboterarms angeordnet ist. Eine hierfür erforderliche Lagereinrichtung und Antriebseinrichtung kann entweder im Bereich der Sauggreifereinrichtung oder im Bereich des angrenzenden Glieds des Roboterarms vorgesehen sein. Insbesondere kann der Hubschlauch selbst über die erste oder zweite Anbindungsschnittstelle drehbar sein. Insbesondere können parallel zum Hubschlauch oder vorzugsweise im Inneren des Hubschlauchs Linearführungs- oder Drehführungseinrichtungen, insbesondere mit durch die Robotersteuereinrichtung ansteuerbaren Antriebseinrichtungen vorgesehen sein.

Insbesondere zur Unterstützung eines automatischen Steuerungsablaufs durch die Robotersteuereinrichtung erweist es sich als vorteilhaft, wenn eine Wegmesseinrichtung zur Ermittlung einer Position der Sauggreifereinrichtung entlang der Z-Achse vorgesehen ist. Diese Wegmesseinrichtung ist zweckmäßigerweise im Bereich des Hubschlauchs und parallel hierzu angeordnet bzw. ausgerichtet. Sie kann in an sich beliebiger Weise ausgebildet sein, insbesondere eine enkodierbare Seilrolle oder eine laserbasierte Abstandsmessvorrichtung umfassen. Die die Abstandsmessung kann beispielsweise zwischen einem oberen Referenzpunkt im Bereich der Roboterglieder und einem unter Referenzpunkt im Bereich der Sauggreifereinrichtung erfolgen.

Weiter kann in vorteilhafter Weise eine Unterdruckmesseinrichtung zur Ermittlung eines Unterdrucks innerhalb des Hubschlauchs vorgesehen sein. Hierfür ist zweckmäßigerweise ein Unterdrucksensor in einem unterdruckführenden Bereich des Hubschlauchs, insbesondere nahe bei der Sauggreifereinrichtung, angeordnet.

Weiter erweist es sich als vorteilhaft, wenn ein Proportionalventil bei dem Hubschlauch vorgesehen ist, zur Steuerung eines Anhebens, Absenkens oder Haltens des Hubschlauchs und der Sauggreifereinrichtung. Durch Ansteuerung des Proportionalventils kann mehr oder weniger Leckageluft in den Hubschlauch eingeleitet werden, sodass auch bei im Wesentlichen gleichbleibender Saugleistung der unterdruckerzeugenden Einrichtung ein Anheben, Absenken oder Halten des Hubschlauchs der Sauggreifereinrichtung ausgeführt werden kann.

Weiter erweist es sich als vorteilhaft, wenn eine Absperreinrichtung im Strömungsweg zwischen dem unterdruckführenden Hubschlauch und der Sauggreifereinrichtung vorgesehen ist. Hierdurch kann die Sauggreifereinrichtung bzw. eine unterdruckbeaufschlagbare Ansaugseite der Sauggreifereinrichtung von dem Unterdruck im Hubschlauch abgekoppelt werden, was das rasche Absetzen eines angesaugten Gegenstands unterstützen kann.

Es kann auch vorgesehen sein, dass bei der Sauggreifereinrichtung ein Ventil zur Unterstützung eines Ablösens angesaugter Gegenstände oder zur Verhinderung eines Anhebens des Hubschlauchs und der Sauggreifereinrichtung beim Ansaugen eines Gegenstands vorgesehen ist. Die vorerwähnte Absperreinrichtung und auch das vorerwähnte Ventil können der eingangs schon erwähnten Ventileinrichtung bei der Sauggreifereinrichtung zugeordnet sein. Sie können sowohl mittels manueller Bedienelemente bei der Sauggreifereinrichtung als auch in einem automatischen Steuerungsablauf durch die Robotersteuereinrichtung angesteuert werden, je nachdem, ob ein manueller Betrieb durch die Bedienperson oder ein automatischer Steuerungsablauf durch die Robotersteuereinrichtung oder eine tatsächliche Mischform ausgeführt wird. Im letzteren Fall ist dann zweckmäßigerweise eine Master/Slave-Ausbildung vorgesehen.

Zur Ansteuerung der unterdruckerzeugenden Vorrichtung, also zur Vorgabe, Steuerung und/oder Regelung eines Volumenstroms oder Massenstroms, also im weitesten Sinne der Unterdruckleistung der unterdruckerzeugenden Einrichtung erweist es sich als vorteilhaft, wenn die Robotersteuereinrichtung eine Drehzahlsteuereinrichtung umfasst, um die unterdruckerzeugende Einrichtung anzusteuern.

Es erweist sich weiter als vorteilhaft, wenn die Robotersteuereinrichtung ausgebildet ist, um als Eingangsgröße eine Position der Sauggreifereinrichtung entlang der Z-Achse und einen Unterdruck innerhalb des Hubschlauchs zu erhalten und über Steuerausgänge Steuersignale an wenigstens ein Steuerorgan im Bereich der Sauggreifereinrichtung oder des Hubschlauchs und insbesondere auch an die unterdruckerzeugende Einrichtung zu geben. Bei dem vorstehend erwähnten Steuerorgan kann es sich um die vorstehend erwähnte Absperreinrichtung im Strömungsweg zwischen Hubschlauch und Sauggreifereinrichtung oder um die Ventile der Ventileinrichtung der Sauggreifereinrichtung handeln. Weitere Merkmale, Einzelheiten und Vorteile der Erfindung ergeben sich aus den beigefügten Patentansprüchen und aus der zeichnerischen Darstellung und nachfolgenden Beschreibung einer erfindungsgemäßen Ausführungsform der Unterdruckhandhabungseinrichtung.

In der Zeichnung zeigt:

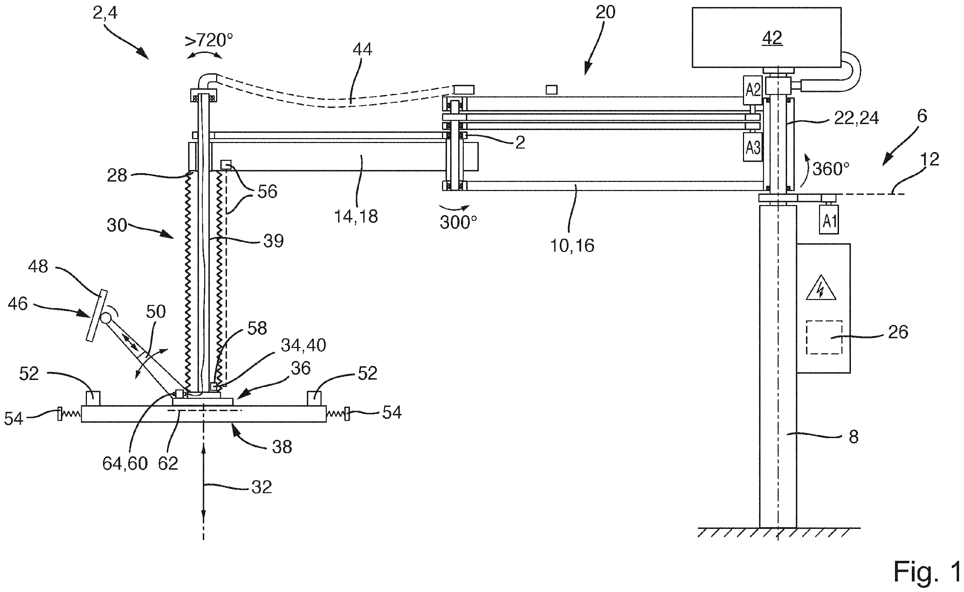

- Figur 1: eine schematische Seitenansicht einer erfindungsgemäßen Unterdruckhandhabungseinrichtung.

Figur 1 zeigt eine Unterdruckhandhabungseinrichtung 2 zum Ansaugen, Anheben, Verlagern, Absenken und Absetzen von Gegenständen, die erfindungsgemäß als kollaborierender Roboter 4 ausgebildet ist. Die Unterdruckhandhabungseinrichtung 2 ist als Säulenschwenkkrananordnung 6 ausgebildet. Sie umfasst eine feststehende in vertikaler Richtung erstreckte Standsäule 8, an der oben ein erster horizontaler Kranarm 10 in einer horizontalen Ebene 12 schwenkbar angelenkt ist. Am Ende des ersten horizontalen Kranarms 10 ist ein zweiter horizontaler Kranarm 14 ebenfalls in der horizontalen Ebene 12 oder parallel hierzu schwenkbar angelenkt. Der erste und der zweite Kranarm 10, 14 bilden zueinander schwenkbare Glieder 16, 18, die einen Roboterarm 20 des kollaborierenden Roboters 4 bilden. Zur gelenkigen Schwenkverbindung der Kranarme 10, 14 bzw. der Glieder 16, 18 des Roboterarms 20 sind Schwenklageranordnungen 22, 23 und deren Schwenkantriebseinrichtungen 24, 25 lediglich schematisch angedeutet. Sie sind durch eine nur angedeutete Robotersteuereinrichtung 26 ansteuerbar.

Am freien Ende des endständigen Glieds 18 des Roboterarms 20 ist über eine erste Anbindungsschnittstelle 28 ein kontrahierbarer Hubschlauch 30 angeschlossen, der sich entlang einer vertikalen Z-Achse 32 nach unten erstreckt und über eine zweite Anbindungsschnittstelle 34 mit einer Sauggreifereinrichtung 36 verbunden ist. An die Sauggreifereinrichtung 36 ist ein Sauggreifer 38 an sich beliebiger Art und Ausbildung anschließbar, welcher entsprechend den in der anstehenden Arbeitsaufgabe zu handhabenden Gegenständen ausgebildet bzw. ausgewählt ist.

Der kontrahierbare Hubschlauch 30 bzw. eines die ihm gebildete Z-Achse 32 ist verwindungsteif ausgebildet, damit ein Schwingen der Sauggreifereinrichtung 36 mit dem daran angesaugten Gegenstand vermieden werden kann, so dass die Unterdruckhandhabungseinrichtung 2 auch voll automatisiert betrieben werden kann. Wie eingangs dargelegt, kann dies durch eine verwindungsteife Ausbildung des Hubschlauchs 30 selbst realisiert werden. Im beispielhaft dargestellten Fall ist jedoch im Inneren des Hubschlauchs 30 eine längenverstellbare, insbesondere teleskopierende, Führungseinrichtung 39 angeordnet, welche ein Auslenken der Sauggreifereinrichtung 36 quer zur Z-Achse 32 verhindert. Zugleich kann diese Führungseinrichtung 39 auch zur Zuführung von Steuerleitungen zu der Sauggreifereinrichtung 36 dienen.

Zur Ausbildung einer weiteren Achse des kollaborierenden Roboters 4 ist die Sauggreifereinrichtung 36 um vorzugsweise 720° um die Z-Achse 32 drehbar bezüglich des endständigen Glieds 18 des Roboterarms 20 in der horizontalen Ebene 12 ausgebildet. Hierfür kann eine weitere Schwenklageranordnung 40 beispielsweise im Bereich der ersten oder zweiten Anbindungsschnittstelle 28, 34 des Hubschlauchs 30 ausgebildet sein. Der durch Beaufschlagen mit Unterdruck kontrahierbare Hubschlauch 30 wirkt als Antrieb entlang der Z-Achse 32.

Für die Unterdruckbeaufschlagung ist eine unterdruckerzeugende Einrichtung 42, insbesondere in Form eines Gebläses, vorgesehen, von der eine unterdruckbeaufschlagbare und unterdruckführende Leitung 44 wegführt und mit dem Hubschlauch 30 kommuniziert. Typischerweise wird das Innere des Hubschlauchs 30 mit einem für den Betrieb geeigneten durch die unterdruckerzeugende Einrichtung 42 bzw. deren Steuereinrichtung vorgebbaren Unterdruck beaufschlagt.

Diese Steuereinrichtung kann mit der Robotersteuereinrichtung 26 zusammenwirken oder von dieser gebildet sein. Die Bewegung der Sauggreifereinrichtung 36 in der Z-Richtung 32, also Heben, Senken, und auch Ansaugen oder Ablösen eines Gegenstands, wird durch Betätigung einer im Bereich der Sauggreifereinrichtung 36 vorgesehenen Ventileinrichtung veranlasst bzw. ausgeführt. Diese Ventileinrichtung ist sowohl durch die Robotersteuereinrichtung 26 ansteuerbar und betätigbar als auch durch manuelle Bedienung durch eine Bedienperson. Hierfür hält sich die Bedienperson in einem Aufenthaltsbereich vertikal unterhalb der Kinematik des Roboters 14, also unterhalb dessen Roboterarm 20, auf. Hierfür weist die Sauggreifereinrichtung 36 manuelle Bedienelemente 46 im weitesten Sinne auf. Im beispielhaft dargestellten Fall ist ein manuelles Bedienelement 46 in Form eines manuell ergreifbaren Handgriffs 48 vorgesehen, der schwenkbar an einem seinerseits schwenkbaren Betätigungsarm 50 angelenkt ist, der eine Art Deichsel zu der Sauggreifereinrichtung 36 bildet. Handgriff 48 und Betätigungsarm 50 sind über eine jeweils horizontale Drehachse schwenkbar, so dass der Benutzer bequem verschiedene Hubhöhen der Sauggreifereinrichtung 36 adaptieren kann. Die manuellen Bedienelemente 46 können des Weiteren Tasten oder berührungssensitive Felder für die manuelle Bedienung umfassen, oder aber mechanische Stellorgane, wie Hebel oder Drehgriffe zur Ansteuerung und Betätigung von Komponenten der Sauggreifereinrichtung 36, also insbesondere deren Ventileinrichtung, oder zur Interaktion mit der Robotersteuereinrichtung 26. Diese Kommunikation kann in an sich beliebiger Weise drahtlos oder drahtgebunden erfolgen.

Zur weiteren Aufrechterhaltung der Betriebssicherheit können optionale Sicherheitsraumscanner 52 vorgesehen sein, und es ist ein schematisch angedeuteter Kontaktschalter 54 beispielhaft vorgesehen.

Zur Bereitstellung von Eingangsgrößen, insbesondere für den automatisierten Steuerungsablauf durch die Robotersteuereinrichtung ist im Bereich des Hubschlauchs 30 eine Wegmesseinrichtung 56 vorgesehen und in der Figur angedeutet. Mit ihr wird eine Position der Sauggreifereinrichtung 36 entlang der Z-Achse 32 ermittelt. Weiter ist eine schematisch angedeutete Unterdruckmesseinrichtung 58 zur Bestimmung des Unterdrucks innerhalb des Hubschlauchs 30 vorgesehen. Ein jeweiliger Messausgang der Wegmesseinrichtung 56 und der Unterdruckmesseinrichung 58 sind mit einem Eingang der Robotersteuereinrichtung 26 verbunden. Hierfür kann eine an sich beliebige Daten- und Signalkommunikation verwendet werden.

Die eingangs erwähnten Steuerorgane für die Steuerung der Zuführung von Unterdruck zu dem Sauggreifer 38 bzw. zur Steuerung des Unterdrucks im Hubschlauch 30 umfassen ein Proportionalventil 60 zur Steuerung eines Unterdrucks innerhalb des Hubschlauchs, um den Hubschlauch (30)und die Sauggreifereinrichtung (36) anzuheben, abzusenken oder zu halten. Weiter ist eine Absperreinrichtung 62 schematisch angedeutet, die im Strömungsweg zwischen dem unterdruckführenden Hubschlauch 30 und der Sauggreifereinrichtung 36 vorgesehen ist, mittels dessen die Sauggreifereinrichtung 36 und deren Sauggreifer 38 von dem Unterdruck innerhalb des Hubschlauchs 30 abkoppelbar ist, damit ein angesaugter Gegenstand rasch abgesetzt werden kann.

Es können weitere Ventile 64 im Bereich der Sauggreifereinrichtung 36 vorgesehen sein, um das Ablegen eines angesaugten Gegenstands zu unterstützen oder ein zu rasches Anheben des Hubschlauchs und der Sauggreifereinrichtung beim Ansaugen eines Gegenstands zu verhindern.

Wie bereits eingangs erwähnt, ist die Robotersteuereinrichtung 26 ausgebildet, um Eingangsgrößen zu erhalten und hieraus Steuersignale an wenigstens ein Steuerorgan im Bereich der Sauggreifereinrichtung 36 oder des Hubschlauchs 30 und vorzugsweise auch an die unterdruckerzeugende Einrichtung 42 zu geben, um hierdurch einen automatisierten Steuerungsablauf durch die Robotersteuereinrichtung 26 auszuführen.

Die erfindungsgemäße Handhabungseinrichtung 2 ermöglicht sowohl einen vollautomatisierten Roboterbetrieb als auch einen handgeführten oder handunterstützen Betrieb durch eine Bedienperson. Insbesondere sind die eingangs erwähnten Interaktionen zwischen der Bedienperson und der Robotersteuereinrichtung 26 möglich, also insbesondere der Wechsel in einen Handführbetrieb insbesondere in einem Bewegungs-Lernmodus, um intendierte Bewegungsmuster bei dem Roboter und dessen Steuerungsvorrichtung 26 einzugeben. Insbesondere ist es rein beispielhaft auch möglich oder denkbar, dass die Kolloboration zwischen Roboter und Bedienperson derart ist, dass einige Aufgaben, insbesondere eine in horizontaler Ebene auszuführende Verlagerungsaufgabe, von dem Roboter und der Robotersteuerung 26 ausgeführt werden, während andere Aufgaben, insbesondere der Hub- und Senkbetrieb der Sauggreifereinrichtung 36 und/oder eine Betätigung der Ventileinrichtung zum Ansaugen und/oder Absetzen eines Gegenstands, handgeführt durch die Bedienperson ausgeführt werden.

Es erweist sich als besonders vorteilhaft, dass der Hubschlauch biege- und verwindungssteif im eingangs weit verstandenen Sinn ausgebildet ist, so dass eine durch den Roboter veranlasste Bewegung quer zur Z-Achse 32 nicht zu einer Pendelbewegung der Sauggreifereinrichtung 36 nebst Sauggreifer 38 und angesaugtem Gegenstand führen. Dies erhöht die Betriebssicherheit und ermöglicht an sich erst einen robotergeführten oder roboterunterstützten Betrieb unter Einsatz einer oberhalb des Aufenthaltsbereichs der Bedienperson ausgebildeten Roboterkinematik.

## Patentansprüche

1. Unterdruckhandhabungseinrichtung (2) zum Ansaugen, Anheben, Verlagern, Absenken und/oder Absetzen von Gegenständen, die als kollaborierender Roboter (4) ausgebildet ist, umfassend:
eine unterdruckerzeugende Einrichtung (42) oder eine Anschlussschnittstelle zu einer Unterdruckversorgungseinrichtung,
eine Robotersteuereinrichtung (26),
mehrere gelenkig miteinander verbundene und/oder translatorisch zueinander stellbare Glieder (16, 18) die einen Roboterarm (20) bilden,
mehrere Antriebseinrichtungen (24, 25) zum Bewegen der gelenkig miteinander verbundenen Glieder (16, 18) oder der translatorisch zueinander stellbaren Glieder des Roboterarms (20) gegeneinander,
wobei die bewegbaren Glieder (16, 18) des Roboterarms vertikal oberhalb eines Aufenthaltsbereichs einer Bedienperson im kollaborierenden Betrieb des Roboters (4) angeordnet sind,
eine Sauggreifereinrichtung (36), an welche ein Sauggreifer (38) anschließbar ist oder die einen Sauggreifer (38) bildet oder umfasst, an welchem der zu handhabende Gegenstand ansaugbar ist,
wobei die Sauggreifereinrichtung (36) Steuerorgane für die Steuerung der Zuführung von Unterdruck zu einem Sauggreifer (38) umfasst,
einen unterdruckbeaufschlagbaren Hubschlauch (30) als translatorischen Antrieb zur Ausführung einer vertikalen Stellbewegung entlang einer Z-Achse (32),
mit einer ersten Anbindungsschnittstelle des Hubschlauchs (30) zu einem Glied (14) des Roboters (4) und mit einer zweiten Anbindungsschnittstelle (34) des Hubschlauchs (30) zu der Sauggreifereinrichtung (36),
**dadurch gekennzeichnet, dass** der Hubschlauch (30) biege- und verwindungssteif ausgebildet ist, so dass durch den Roboter (4) veranlasste Bewegungen quer zur Z-Achse (32) nicht zu einer Pendelbewegung der Sauggreifereinrichtung (36) mit dem angesaugten Gegenstand führen können, wobei die Sauggreifereinrichtung (36) wahlweise für automatischen Steuerungsablauf durch die Robotersteuereinrichtung (26) und wahlweise für die manuelle Bedienung durch eine Bedienperson ausgebildet ist und hierfür manuelle Bedienelemente (46) aufweist und wobei bei oder innerhalb des Hubschlauchs (30) eine die vertikale Z-Achse versteifende längenverstellbare teleskopierende Führungseinrichtung (39) vorgesehen ist.

2. Unterdruckhandhabungseinrichtung nach Anspruch 1, **dadurch gekennzeichnet, dass** die manuellen Bedienelemente (46) der Sauggreifereinrichtung (36) mit der Robotersteuereinrichtung (26) derart zusammenwirken, dass über diese manuellen Bedienelemente (46) auf die Robotersteuereinrichtung (26) Einfluss genommen werden kann.

3. Unterdruckhandhabungseinrichtung nach Anspruch 2, **dadurch gekennzeichnet, dass** über die manuellen Bedienelemente (46) die Robotersteuereinrichtung (26) dazu veranlasst werden kann, den Roboterarm (20) in einen Handführbetrieb zu versetzen, in welchem ein handgeführtes Bewegen des Roboterarms (20) und seiner Glieder (16, 18) zugelassen ist.

4. Unterdruckhandhabungseinrichtung nach Anspruch 3 oder 5, **dadurch gekennzeichnet, dass** über die manuellen Bedienelemente (46) die Robotersteuereinrichtung (26) veranlasst werden kann, einen Bewegungs-Lernmodus zu aktivieren, bei dem der Roboter (4) das handgeführte Bewegen als Bewegungsmuster für einen Arbeitsbetrieb erlernt.

5. Unterdruckhandhabungseinrichtung nach einem oder mehreren der vorstehenden Ansprüche, **dadurch gekennzeichnet, dass** die Sauggreifereinrichtung (36) eine Ventileinrichtung umfasst, die sowohl durch die Robotersteuereinrichtung (26) als auch durch die manuellen Bedienelemente (46) bei der Sauggreifereinrichtung (36) ansteuerbar oder betätigbar ist.

6. Unterdruckhandhabungseinrichtung nach einem oder mehreren der vorstehenden Ansprüche, **dadurch gekennzeichnet, dass** sie als Wand- oder Säulenschwenkkrananordnung (6) mit, vorzugsweise in einer horizontalen Ebene (12), schwenkbaren Kranarmen (10, 14) ausgebildet ist, welche die Glieder (16, 18) des Roboters bilden.

7. Unterdruckhandhabungseinrichtung nach einem oder mehreren der vorstehenden Ansprüche, **dadurch gekennzeichnet, dass** der Hubschlauch (30) an einem endständigen Kranarm (14) angeordnet ist.

8. Unterdruckhandhabungseinrichtung nach einem oder mehreren der vorstehenden Ansprüche, **dadurch gekennzeichnet, dass** die Sauggreifereinrichtung (36) um die Z-Achse (32) drehbar bezüglich eines nächstliegenden Glieds (18) des Roboterarms (20) angeordnet ist.

9. Unterdruckhandhabungseinrichtung nach einem oder mehreren der vorstehenden Ansprüche, **gekennzeichnet durch** ein manuelles Bedienelement (46) in Form eines Handgriffs (48), der an und bezüglich der Sauggreifereinrichtung (36) schwenkbar angeordnet ist.

10. Unterdruckhandhabungseinrichtung nach einem oder mehreren der vorstehenden Ansprüche, **dadurch gekennzeichnet, dass** eine Wegmesseinrichtung (56) zur Ermittlung einer Position der Sauggreifereinrichtung (36) entlang der Z-Achse (32) vorgesehen ist.

11. Unterdruckhandhabungseinrichtung nach einem oder mehreren der vorstehenden Ansprüche, **dadurch gekennzeichnet, dass** das eine Unterdruckmesseinrichtung (58) zur Ermittlung eines Unterdrucks innerhalb des Hubschlauchs (30) vorgesehen ist.

12. Unterdruckhandhabungseinrichtung nach einem oder mehreren der vorstehenden Ansprüche, **dadurch gekennzeichnet, dass** ein Proportionalventil (60) bei dem Hubschlauch (30) vorgesehen ist, zur Steuerung eines Anhebens, Absenkens oder Haltens des Hubschlauchs und der Sauggreifereinrichtung (36).

13. Unterdruckhandhabungseinrichtung nach einem oder mehreren der vorstehenden Ansprüche, **dadurch gekennzeichnet, dass** eine Absperreinrichtung (62) im Strömungsweg zwischen dem unterdruckführenden Hubschlauch (30) und der Sauggreifereinrichtung (36) vorgesehen ist.

14. Unterdruckhandhabungseinrichtung nach einem oder mehreren der vorstehenden Ansprüche, **dadurch gekennzeichnet, dass** bei der Sauggreifereinrichtung (36) ein Ventil (64) zur Unterstützung eines Ablegens angesaugter Gegenstände oder zur Verhinderung eines Anhebens des Hubschlauchs (30) und der Sauggreifereinrichtung (36) beim Ansaugen eines Gegenstands vorgesehen ist.

15. Unterdruckhandhabungseinrichtung nach einem oder mehreren der vorstehenden Ansprüche, **dadurch gekennzeichnet, dass** die Robotersteuereinrichtung (26) eine Drehzahlsteuereinrichtung umfasst, um die unterdruckerzeugende Einrichtung (42) anzusteuern.

16. Unterdruckhandhabungseinrichtung nach einem oder mehreren der vorstehenden Ansprüche, **dadurch gekennzeichnet, dass** die Robotersteuereinrichtung (26) ausgebildet ist, um als Eingangsgröße eine Position der Sauggreifereinrichtung (36) entlang der Z-Achse (32) und eines Unterdrucks innerhalb des Hubschlauchs (30) zu erhalten und über Steuerausgänge Steuersignale an wenigstens ein Steuerorgan im Bereich der Sauggreifereinrichtung (36) oder des Hubschlauchs (30) und insbesondere auch an die unterdruckerzeugende Einrichtung (42) zu geben.

## Claims

1. Vacuum handling device (2) for suctioning, lifting, displacing, lowering and/or placing objects, which device is designed as a collaborating robot (4), comprising:
a vacuum generating device (42) or a connection interface to a vacuum supply device,
a robot control device (26),
a plurality of links (16, 18) which are hingedly connected to one another and/or are adjustable with respect to one another in a translatory manner and which form a robot arm (20),
a plurality of drive devices (24, 25) for moving the links (16, 18) of the robot arm (20) which are hingedly connected to one another or the links of the robot arm which are adjustable with respect to one another in a translatory manner,
the movable links (16, 18) of the robot arm being arranged vertically above a occupied area of an operator in the collaborative operation of the robot (4),
a suction gripper device (36), to which a suction gripper (38) can be connected or which forms or comprises a suction gripper (38) on which the object to be handled can be suctioned,
the suction gripper device (36) comprising control members for controlling the supply of vacuum to a suction gripper (38),
a lifting tube (30), which can be subjected to vacuum, as a translational drive for carrying out a vertical adjustment movement along a Z-axis (32), having a first connection interface of the lifting tube (30) to a link (14) of the robot (4) and having a second connection interface (34) of the lifting tube (30) to the suction gripper device (36), **characterized in that** the lifting tube (30) is designed to be rigid and torsion-resistant, so that movements transverse to the Z-axis (32) caused by the robot (4) cannot lead to a pendulum movement of the suction gripper device (36) with the suctioned object,
the suction gripper device (36) optionally being designed for automatic control operation by the robot control device (26) and optionally for manual operation by an operator and having manual operating elements (46) for this purpose, and a length-adjustable telescopic guide device (39) which reinforces the vertical Z-axis being provided at or within the lifting tube (30).

2. Vacuum handling device according to claim 1, **characterized in that** the manual operating elements (46) of the suction gripper device (36) interact with the robot control device (26) in such a way that the robot control device (26) can be influenced via these manual operating elements (46).

3. Vacuum handling device according to claim 2, **characterized in that** the manual operating elements (46) can be used to cause the robot control device (26) can be caused to move the robot arm (20) into hand-guided operation in which a hand-guided movement of the robot arm (20) and the links (16, 18) thereof is permitted.

4. Vacuum handling device according to claim 3 or claim 5, **characterized in that** the manual operating elements (46) can be used to cause the robot control device (26) to activate a movement learning mode in which the robot (4) learns the hand-guided movement as a movement pattern for a working operation.

5. Vacuum handling device according to one or more of the preceding claims, **characterized in that** the suction gripper device (36) comprises a valve device which can be activated or actuated both by the robot control device (26) and by the manual operating elements (46) in the suction gripper device (36).

6. Vacuum handling device according to one or more of the preceding claims, **characterized in that** it is designed as a wall or column slewing crane assembly (6) having crane arms (10, 14) which are preferably pivotable in a horizontal plane (12) and which form the links (16, 18) of the robot.

7. Vacuum handling device according to one or more of the preceding claims, **characterized in that** the lifting tube (30) is arranged on a terminal crane arm (14).

8. Vacuum handling device according to one or more of the preceding claims, **characterized in that** the suction gripper device (36) is arranged so as to be rotatable about the Z-axis (32) with respect to a closest link (18) of the robot arm (20).

9. Vacuum handling device according to one or more of the preceding claims, **characterized by** a manual operating element (46) in the form of a handle (48) which is arranged so as to be pivotable on and with respect to the suction gripper device (36).

10. Vacuum handling device according to one or more of the preceding claims, **characterized in that** a distance measuring device (56) for determining a position of the suction gripper device (36) along the Z-axis (32) is provided.

11. Vacuum handling device according to one or more of the preceding claims, **characterized in that** a vacuum measuring device (58) for determining a vacuum within the lifting tube (30) is provided.

12. Vacuum handling device according to one or more of the preceding claims, **characterized in that** a proportional valve (60) is provided in the lifting tube (30) for controlling lifting, lowering or holding of the lifting tube and the suction gripper device (36).

13. Vacuum handling device according to one or more of the preceding claims, **characterized in that** a shut-off device (62) is provided in the flow path between the vacuum-guiding lifting tube (30) and the suction gripper device (36).

14. Vacuum handling device according to one or more of the preceding claims, **characterized in that** in the suction gripper device (36), a valve (64) is provided for assisting in laying suctioned objects or for preventing lifting of the lifting tube (30) and the suction gripper device (36) when an object is suctioned.

15. Vacuum handling device according to one or more of the preceding claims, **characterized in that** the robot control device (26) comprises a rotational speed control device in order to control the vacuum generating device (42).

16. Vacuum handling device according to one or more of the preceding claims, **characterized in that** the robot control device (26) is designed to obtain, as an input variable, a position of the suction gripper device (36) along the Z-axis (32) and a vacuum within the lifting tube (30) and to provide control signals via control outputs to at least one control member in the region of the suction gripper device (36) or the lifting tube (30) and in particular also to the vacuum generating device (42).

## Revendications

1. Dispositif de manipulation par dépression (2) destiné à aspirer, à soulever, à déplacer, à abaisser et/ou à déposer des objets, qui est conçu en tant que robot collaboratif (4), comprenant:
un dispositif générateur de dépression (42) ou une interface de raccordement à un dispositif d'alimentation en dépression,
un dispositif de commande de robot (26),
plusieurs éléments (16, 18) qui sont reliés entre eux de façon articulée et/ou réglables en translation les uns par rapport aux autres et qui forment un bras de robot (20),
plusieurs dispositifs d'entraînement (24, 25) destinés à déplacer les uns par rapport aux autres les éléments (16, 18) reliés entre eux de façon articulée ou les éléments du bras robot (20) réglables en translation les uns par rapport aux autres,
dans lequel les éléments (16, 18) déplaçables du bras du robot sont disposés verticalement au-dessus d'une zone de séjour d'un opérateur en fonctionnement collaboratif du robot (4),
un dispositif à ventouse (36) auquel peut être raccordée une ventouse (38) ou qui forme ou comprend une ventouse (38) sur laquelle l'objet à manipuler peut être aspiré,
dans lequel le dispositif à ventouse (36) comprend des éléments de commande pour commander l'alimentation en dépression d'une ventouse (38),
un tuyau flexible de levage (30) apte à être alimenté en dépression, en tant qu'entraînement en translation pour effectuer un mouvement de réglage vertical le long d'un axe Z (32),
avec une première interface de raccordement du tuyau flexible de levage (30) à un élément (14) du robot (4) et avec une deuxième interface de raccordement (34) du tuyau flexible de levage (30) au dispositif à ventouse (36),
**caractérisé par le fait que** le tuyau flexible de levage (30) est conçu pour être résistant à la flexion et à la torsion de sorte que des mouvements transversaux à l'axe Z (32) qui sont provoqués par le robot (4) ne peuvent pas conduire à un mouvement pendulaire du dispositif à ventouse (36) avec l'objet aspiré,
dans lequel le dispositif à ventouse (36) est conçu au choix pour un déroulement de commande automatique par le dispositif de commande de robot (26) et au choix pour la commande manuelle par un opérateur et comprend à cette fin des éléments de commande manuelle (46), et dans lequel un dispositif de guidage (39) télescopique réglable en longueur qui renforce l'axe Z vertical (39) est prévu au niveau ou à l'intérieur du tuyau flexible de levage (30).

2. Dispositif de manipulation par dépression selon la revendication 1, **caractérisé par le fait que** les éléments de commande manuelle (46) du dispositif à ventouse (36) agissent de concert avec le dispositif de commande de robot (26) de telle sorte que ces éléments de commande manuelle (46) peuvent être utilisés pour influer sur le dispositif de commande de robot (26).

3. Dispositif de manipulation par dépression selon la revendication 2, **caractérisé par le fait que** les éléments de commande manuelle (46) peuvent être utilisés pour amener le dispositif de commande de robot (26) à mettre le bras de robot (20) dans un fonctionnement guidé à la main dans lequel un mouvement guidé à la main du bras de robot (20) et de ses éléments (16, 18) est permis.

4. Dispositif de manipulation par dépression selon la revendication 3 ou 5, **caractérisé par le fait que** les éléments de commande manuelle (46) peuvent être utilisés pour amener le dispositif de commande de robot (26) à activer un mode d'apprentissage de mouvement dans lequel le robot (4) apprend le mouvement guidé à la main en tant que modèle de mouvement pour un fonctionnement de travail.

5. Dispositif de manipulation par dépression selon l'une ou plusieurs des revendications précédentes, **caractérisé par le fait que** le dispositif à ventouse (36) comprend un dispositif de soupape qui peut être commandé ou actionné aussi bien par le dispositif de commande de robot (26) que par les éléments de commande manuelle (46) dans le dispositif à ventouse (36).

6. Dispositif de manipulation par dépression selon l'une ou plusieurs des revendications précédentes, **caractérisé par le fait qu'**il est conçu en tant qu'ensemble de grue pivotante murale ou à colonne (6) ayant des bras de grue (10, 14) qui peuvent pivoter, de préférence dans un plan horizontal (12), et forment les éléments (16, 18) du robot.

7. Dispositif de manipulation par dépression selon l'une ou plusieurs des revendications précédentes, **caractérisé par le fait que** le tuyau flexible de levage (30) est agencé sur un bras terminal de grue (14).

8. Dispositif de manipulation par dépression selon l'une ou plusieurs des revendications précédentes, **caractérisé par le fait que** le dispositif à ventouse (36) est agencé de manière à pouvoir tourner autour de l'axe Z (32) par rapport à un élément (18) le plus proche du bras de robot (20).

9. Dispositif de manipulation par dépression selon l'une ou plusieurs des revendications précédentes, **caractérisé par** un élément de commande manuelle (46) sous la forme d'une poignée (48) qui est disposée de manière pivotante sur et par rapport au dispositif à ventouse (36).

10. Dispositif de manipulation par dépression selon l'une ou plusieurs des revendications précédentes, **caractérisé par le fait qu'**un dispositif de mesure de déplacement (56) destiné à déterminer une position du dispositif à ventouse (36) le long de l'axe Z (32) est prévu.

11. Dispositif de manipulation par dépression selon l'une ou plusieurs des revendications précédentes, **caractérisé par le fait qu'**un dispositif de mesure de dépression (58) destiné à déterminer une dépression à l'intérieur du tuyau flexible de levage (30) est prévu.

12. Dispositif de manipulation par dépression selon l'une ou plusieurs des revendications précédentes, **caractérisé par le fait qu'**une soupape proportionnelle (60) est prévue au niveau du tuyau flexible de levage (30) afin de commander un levage, un abaissement ou un maintien du tuyau flexible de levage et du dispositif à ventouse (36).

13. Dispositif de manipulation par dépression selon l'une ou plusieurs des revendications précédentes, **caractérisé par le fait qu'**un dispositif d'arrêt (62) est prévu dans le trajet d'écoulement entre le tuyau flexible de levage (30) à dépression et le dispositif à ventouse (36).

14. Dispositif de manipulation par dépression selon l'une ou plusieurs des revendications précédentes, **caractérisé par le fait qu'**au niveau du dispositif à ventouse (36) est prévue une soupape (64) pour supporter un dépôt d'objets aspirés ou pour empêcher un levage du tuyau flexible de levage (30) et du dispositif à ventouse (36) lors de l'aspiration d'un objet.

15. Dispositif de manipulation par dépression selon l'une ou plusieurs des revendications précédentes, **caractérisé par le fait que** le dispositif de commande de robot (26) comprend un dispositif de commande de vitesse afin de commander le dispositif générateur de dépression (42).

16. Dispositif de manipulation par dépression selon l'une ou plusieurs des revendications précédentes, **caractérisé par le fait que** le dispositif de commande de robot (26) est conçu pour obtenir en tant que grandeur d'entrée une position du dispositif à ventouse (36) le long de l'axe Z (32) et une dépression à l'intérieur du tuyau flexible de levage (30) ainsi que pour délivrer via des sorties de commande des signaux de commande à au moins un organe de commande au niveau du dispositif à ventouse (36) ou du tuyau flexible de levage (30) et en particulier également au dispositif générateur de dépression (42).
